Europäisches Patentamt

European Patent Office

Office européen des brevets

(19)

(11) Veröffentlichungsnummer: **0 073 840**

**A1**

(12) **EUROPÄISCHE PATENTANMELDUNG**

(21) Anmeldenummer: 81100618.8

(22) Anmeldetag: 28.01.81

(51) Int. Cl.³: **F 03 D 9/00**
**F 03 G 7/02**

(43) Veröffentlichungstag der Anmeldung:
16.03.83 Patentblatt 83/11

(84) Benannte Vertragsstaaten:
BE CH DE FR GB IT LI NL SE

(71) Anmelder: Rusu, Costica
Gesetzlich vertreten durch Rechtsanwalt Dr. Herbert
Schmid Bahnhofsplatz 5/III
D-8000 München 2(DE)

(72) Erfinder: Rusu, Costica
Gesetzlich vertreten durch Rechtsanwalt Dr. Herbert
Schmid Bahnhofsplatz 5/III
D-8000 München 2(DE)

(54) **Hydroelektrische Anlage durch Wind- Sonne- und Wasserstoffenergien HE - W.S.H.**

(57) Die Anlage besteht aus grossen, in einem Kreis aufgestellten Wassertürmen (2, 7), zwischen denen Windturbinen (16) angeordnet sind und auf deren Wänden parabolische Spiegel (22) und Solarkollektoren (24) angebracht sind. Durch die Windturbinen über Generatoren getriebenen Pumpen fördern Wasser zu hochgelegenen Behältern (6), um damit Wasserturbinen zu speisen.

Der in den Solarkollektoren erzeugte Dampf treibt mit Generatoren gekuppelte Dampfturbinen an. Zur Speicherung der Wind- und Sonnenenergie, für Perioden mit wenig Wind und Sonne, drückt das erhitzte Wasser sowie der in einigen Türmen hergestellte Wasserstoff auf den Wasserspiegel einer Wasserpumpe (26). Ein zentraler Turm (9) enthält die Generatoren, die Pumpen und die Turbinen.

./...

EP 0 073 840 A1

Croydon Printing Company Ltd.

Fig 1

0073840

## Die hydroelektrische Anlage durch Wind- Sonnen- und Wasserstoffenergien (HE - W.S.W.)

Auf dem Gebiet der Verwendung der Wind- Sonnen- und Wasserstoffenergie wurden in den letzten 10 Jahren viele Verfahren und Versuche durchgeführt, mit dem Ziel andere verwendbare Energien zu erhalten, die die mit den klassischen Methoden erhaltenen Energien : thermische, thermonukleare und hydraulische zu ersetzen.

In dem heutigen Stand der Verfahren und Methoden die zur Herstellung der Wind- und Solarenergie verwendet werden ( die sehr verschiedenen Schwankungen unterliegen, die sogar zum Aussetzen für kürzere oder längere Zeitspannen führen können) bis zum heutigen Tag, konnte man keine verwendbare Energien herstellen die wirtschaftlich die mit den bekannten klassischen Methoden produzierte Energie ersetzen könnten.

Ebenso, die Lagerung einer Energiemenge sowie die ununterbrochene Lieferung einer relativ konstanten Energie wurde bis heute nur für sehr kurze Zeitabstände (-nur wenige Stunden-) nach dem Aussetzen der Wind- oder Solarenergie erreicht, obgleich es bekannt ist, daß durch adequate Pumpen , jede von den Energien :Wind-Sonne- und Wasserstoff, eine Quantität Wasser erhöht werden kann von einer niedrigen Höhe zu einer viel größeren Höhe, wo das Wasser in einem großen Behälter gelagert werden kann ( das bedeutet eine hydraulische potentielle Energie) die gebraucht werden kann, nach Wunsch, durch Verwandeln in eine hydraulische kinetische Energie, durch freifallendes Wasser , in eine hydraulische Turbine gekuppelt mit elektrischen Generatoren welche elektrische Energie für die Industrie liefern.

Die Verwendung des Wasserstoffes zur Herstellung von Energiequellen , bei dem heutigen technischen Stand der Herstellungsmethoden des Wasserstoffes, ist nicht möglich und zwar aus dem Grunde daß Wasserstoff der mit Verwendung von großen Mengen von klassischen Energien hergestellt wird, sehr teuer ist.

Ausserdem, soweit uns bekannt ist, wurden zur Herstellung von neuen Energiequellen bis heute keine Forschungen und Versuche durchgeführt auf dem Gebiet der gleichzeitigen Verwendung , in den selben Fabrikanlagen von Wind-, Solar- und Wasserstoffenergien, die durch gegenseitiges Helfen in alternativen Einsatz, wenn eine oder andere Energie fehlen könnte, oder zu schwach geworden ist, noch eine konstante Energie liefern würden.

Ebenso wurde bis heute die Möglichkeit der elektrolitischen Herstellung des Wasserstoffes nicht während des Vorhandenseins von großen Wind- und Solarenergie nich erforscht, auch nicht die Lagerung und Aufbewahrung des Wasserstoffes , um ihn bei dem Fehlen von den anderen zwei Energiequellen zur Herstellung von neuer Energie zu verwenden.

Diese Erfindung gibt die Möglichkeit zur Verwendung von Wind-,
Sonne- und Wasserstoffenergie in derselben Anlage für hergestellte
potentielle hydraulische Energie und potentielle Wasserstoffenergie
welche Energien in einer regelmäßigen Ordnung gebraucht werden
können (nach Wunsch) mit einer konstanten Durchflußmenge pro Sekunde (m³/sec) und auch zur Herstellung von Wasserstoff für Reserve wenn die Wind- und Solarenergien in einer großen Aktivität
sind und sind durch folgende Prinzipien karakterisiert:

I) Sie verwenden    'mehrere Wasserschlöße (1) mit sehr großen
   Durchmesser und Höhe welche die Wände so haben konstituirt von
   großen vergespannten Kolonnen (2) die sich kreuzen (3) ( eine
   mit der anderen überschneiden) sodaß sie eine Stetigkeitskette
   bilden, die einen großen Raum für die Wasserschloßbehälter
   (darunter 4, dazwischen 5 und die höchste 6) einschließt.
   Diese Beschaffenheit der Wände sichert einen sehr großen Widerstand, Festigkeit und Stabilität des ganzen Gebäudes und auch
   eine gute Wasserdurchläßigkeit  von allen Behältern des Wasserschlosses,weil die vorgespannten Kollonnenwände sich elastisch
   auseinander und zusammenziehen können und brauchen nicht die
   Dehnungsspalten.

II) Die inneren Kolonnen (7) und die dazwischenliegenden Decken (8)
    und auch die  höchste Decke des Wasserschloßes sind so gebildet
    daß sie alle Installationen   stützen können: verschiedene Pumpen, Röhren ,die Fabrik und Ladungen für Wasserstoff und Sauerstoff, Behälter etc. Die Decken und inneren Kolonnen sind folgendermaßen konstruirt:
    - die inneren Kolonnen (7) sind leer, sie haben große Durch-
    messer und werden mit Wasser gefüllt und wieder geleert ind er
    selben Zeit wie die Behälter und auch diese sind mit den Riffeln (7a) und rautenförmigen Gittern (8) umspannt, was ihnen
    einen sehr großen Wiederstand, Festigkeit und Stabilität bei
    allen Kräften verleiht. In der Achse jedes Wasserschlosses
    gibt es eine Kolonne (9) die viel größer ist und Raum für technische Dinge läßt: -für Wasserturbinen, Gasturbinen, Generatoren, Röhren, elektrische Leitungen u.a.
    -.die Decken sind aus drei Teilen konstruirt:
      a) eine kräftige Stahlbetonplatte (10) mit radialen (11) und
         kreisförmigen (12) vergespannten Trägern, aber mit der
         notwendigen Dehnungsspalte;
      b) ein Teil von mehreren Schichten (13) zur Trennung und Isolation von Teil a und Teil c und auch um kleinere Bewegungen und Gleitungen zwischen Teil a und Teil c zu gestat-
         ten;
      c) eine wasserdichte Stahlbetonplatte (14) mit kreisförmigen
         vorgespannten Rippen (15) (15a) - aber ohne Spaltungsdeh=
         =nung - welche die Bildung von Ritzen verhindert.

III) Die Wände des Wasserschloßes bilden zurselben Zeit sehr große
     Abschirmungen um die Luftströmungen, , die durch den Wind erstanden sind und die Richtung der Windturbinen (16) und ihren
     technischen Räume (17) zu leiten, diese liegeh gewöhnlich
     zwischen zwei      und auf Wasserschlößern, weil an diesen
     Stellen die Luftströmungen konzentriert sind durch die

Abschirmungswände und Ergänzungswände (18) und (19), sodaß jede Windturbine einen gekupelten Generator für Wasserpumpen betreiben kann um
eine Quantität Wasser zu dem höchsten Behälter (6) zu bringen, auch
wenn die Intensität der Winde schwach ist. Die Windturbinen und die
Ergänzungswände sind von kräftigen Konstruktionen (21) getragen
(Rahmen mit waagerechten Trägern).

IV Die Sonnenenergie ist räumlich gesammelt - nämlich auf die Waagrechte des Wasserspiegelbehälters und auf den äusseren Flächen der Wände des Wasserschlosses senkrecht parabolische Spiegel (22), gebildet aus beweglichen Sektoren (22a), aufgestellt auf der ganzen Höhe auf der Ost-, Süd-
und Westseite des Wasserschloßes. Jeder Spiegel hat in seinen
Achsen Wände (23) von mehreren schwarzen Röhren (24) gefüllt
mit einer flüchtigen Flüßigkeit die unter Einfluß der Solarenergie seine Temperatur stark erhöht und seinen inneren Druck und
welche stark auf die Oberfläche des Wassers (25) einer Wasserpumpe (26) drückt, die in Verbindung steht mit der Wandröhre
(welche meist mit vielen anderen Wasserpumpen in den niedrigsten
Behälter (27) des Wasserschloßes situirt ist) und nötig ist um
das Wasser in den Wasserschloßbehälter zu steigen durch eine zurückdrängende Röhre (28) wo das Wasser gelagert ist und hydroelektrische Energie nach Wunsch und Programmierung herstellt.
Aber auch der Dampf der flüchtigen Flüßigkeit wird verwendet um
eine Gasturbine zu speisen (29) , die gekuppelt ist mit einem
Generator der auch elektrische Energie liefert, nachdem der
Dampf sich abgekühlt und wieder verflüßigt ( mit Hilfe des Wassers das die hydroelektrische Turbine (30) speist und auch mit
dem Wasser das in den Behältern gelagert ist) nimmt er seinen
Platz in den Wandröhren der parabolischen Spiegeln wieder ein
zur selben Zeit in der eine neue Quantität von Wasser die Wasserpumpe füllt, sodaß von diesem Moment ein neuer Zyklus beginnt,
die Sola renergie und die Hydroelektrischeenergie zu verwandeln.

V) Einige Kolonnen des Wasserschloßes sind bestimmt für die Herstellung termischer Energien aus dem Wasserstoff. Diese Energie steigert die Temperatur und den inneren Druck der flüchtigen Flüßigkeit gelagert in den termischen Kesselröhren, die drücken stark
auf die Oberfläche (25) der Wasserpumpe (26) mit demselben Ziel
wie die Solarenergie aber nur in der Zeit wenn diese Energie und
die Windenergie fehlt oder sehr schwach ist. Der Zyklus zur Herstellung der hydroelektrischen und elektrischen Energie ist derselbe wie er oben beschrieben ist, (bei IV).

VI) Im Falle das es im Gebiet einen Hügel gibt ( mit etwa 5o-2oo m)
kann man die Konstruktionen der Anlage HE-W.S.H. anpassen und
die Kosten der Anlage reduzieren durch Ausnutzung der Höhe der
Hügels ( für Wasserslöße, Behältern, Turbinenplätze, Abschirmwände etc.)

In den folgenden Beschreibungen benennen wir die hydroelektrische
Wind-,Solar- und Wasserstoffanlage, kurz HE-W.S.H.Anlage.

Diese Anlage, die übereinstimmt mit der Erfindung, hat außer den
bis jetzt gezeigten Vorteile gegenüber der klassischen Energieanlagen
(termische, termonukleare und hydraulische Anlagen) noch folgende Vorteile:

1) Diese Anlage (HE-W.S.H.) kann in jeder Latitude (südlich bis nördlich) aufgestellt werden, weil die beiden Energien - Wind und
   Sonne- sich zu vielen Zeiten ergänzen (Tag und Nacht) und weil
                  Wind und Sonne einfangen auch gut arbeiten können
   in Zeiten wenn diese Energien schwach sind.

2) In der HE- W.S.H. Anlagen gibt es wenig verlorene Energien weil
   die starken und auch die schwachen Energien aufgefangen werden in
   derselben Installation und auch die Verwandlung in elektrische-
   und hydroelektrische Energien durch Lagerung der Energien Gestalt
   der potentiellen hydraulischen Energie und potentiellen termischer
   Wasserstoffenergie.

3) Der Platz eine HE-W.S.H. Anlage aufzustellen kann unergiebig
   und auch schlecht sein, sodaß sie in der Nähe von Industrien aufgestellt werden kann, da sie auch ungefährlich ist und auch Siedlungen nicht gefährdet und die Luft nicht verschmutzt.

4) Die Kosten für produzierte kw/h in einer HE-W.S.H. Anlage können
   geringer sein als die Kosten für eine kw/h hergestellt in einer
   klassischen elektrischen Anlage ( termische, termonukleare und
   hydraulische Anlage, weil die HE- W.S.H. Anlage:
            -keinen Brennstoffe braucht
            -das Wasser und die flüchtige Flüssigkeit werden verbraucht
             und kehren wieder zurück und der Rückgewinn erfolgt mit
             sehr wenig Verlust
            -alle gebrauchten Materialien für Installationen und Konstruktionen sind einfach und dauerhaft
            - die Instandhaltung der Installation ist einfach, sie
             braucht nur wenige Fachleute zur Aufsicht.

Es ist selbstveständlich daß die Kontinuität der Lieferung und die
Kosten eines kw/h von der Größe der HE-W.S.H. Anlage abhängt, das
heißt von der Höhe und Durchmesser der Wasserschlöße und ihren Behälter.

Ein Beispiel von einer HE-W.S.H. Anlage ist in der folgenden Skizzen
gegeben , die zeigen:

Fig.1 ein waagerechter Querschnitt durch eine HE-W.S.H. Anlage mit
      drei Wasserschlößen
Fig.2 ein senkrechter Schnitt durch die Achse eines Wasserschloßes
      mit Windturbine
Fig.3 eine ausführliche Ansicht (waagerechter Querschnitt) der parabolische Spiegel und die Röhrenwände
Fig.4 eine aursführliche Ansicht der drei Teile der Decken
Fig.5 eihe Ausführliche Ansicht eines Teiles der inneren Kolonnen
      mit den rautenförmigen Gittern umspannt.

Forderungen ( Patentansprüche).

1) Die Anlage die für die Lieferung elektrischer Energie Windenergie, Solarenergie oder Wasserstoffenergie braucht, ist dadurch karakterisiert daß alle drei Energien mitwirken durch Benutzung mehrerer Wasserschlößer ( oder Behälter auf hohen Hügel situirt) um diese Energien zu verwandeln in eine gelagerte potentielle Wasserstoffenergie und eine gelagerte potentielle Hydroenergie um eine fortwährende Lieferung der elektrischen Energie zu ellen Zeiten (Tag und Nacht) sicherzustellen.

2) Die Anlage wie Forderung 1 ist charakterisiert dadurch das Benützen riesiger Wasserschlößer deren Wände ( aus leeren Kolonnen (2) von großen Durchmesser und Höhe und mit vorgespannten Reifen) sich kreuzen (3) ( eine mit der anderen überschneiden) sodaß sie eine Stetigkeitskette bilden , die einen großen Raum für Wasserschlößer und ihre Behälter einschließen,welche einen sehr großen Widerstand, hohe Festigkeit, Stabilität und Wasserundurchlässigkeit haben.

3) Die Alagen wie Forderund 1 und 2 werden dadurch charakterisiert daß die innere, leere, große mit rautenförmigen Gittern vergespannten Kolonnen (7) die die Decken des Wasserschloßes stützen, mit allen Gewichten der Instalationen und Behältern und wo die Decken aus drei Teilen konstituirt sind, einer kräftigen Stahlbetondecke, einem Teil von mehreren Schichten zur Trennung und Gleitungen um kleinere Bewegungen zwischen dem ersten Teil und dem dritten Teil zu gestatten, welcher eine Wasserdichte Stahlbetonplatte (14) mit kreisförmigen vorgespannten Rippen (15) ohne Dehnungsspaltungen, welche die Bildung von Ritzen verhindern.

4) Die Anlage wie Forderung 1 - 3 ist charakterisiert dadurch die Wände des Wasserschlosses die sehr große Abschirmungen bilden die mit anderen Ergänzungsabschirmungen (18) und (19) die Luftströmungen (entstanden durch die Winde) konzentriert um sie in die Richtung wo die Windturbine (16) situiert sind zu leiten, damit die Wasserpumpen betrieben werden können um eine Quantität Wasser in den höchsten Behälter des Wasserschloßes zu bringen.

5) Die Anlage wie Forderungen 1 - 4 ist charakterisiert dadurch ,daß die Sonnenenergie ist räumlich gesammelt, - nämlich auf die Waagrechte des Wasserspiegelbehälters - und auf den äusseren Flächen der Wände des Wasserschlosses senkrecht parabolische Spiegel (22) aufgestellt sind die die in ihren Achsenwände (23) mehrere schwarze Röhren haben (24) gefüllt mit einer flüchtigen Flüssigkeit die unter Einfluß der Solarenergie seine Temperatur und Druck erhöht um eine Quantität Wasser von einem niedrigen Behälter in einen höheren Behälter zu pumpen.

6) Die Anlage wie Forderungen 1 - 5 ist charakterisiert dadurch daß einige Kolonnen des Wasserschloßes die Wasserstoffenergien brauchen um in einem Röhrenkessel ( der gekühlt ist mit derselben flüchtigen Flüssigkeit) dasselbe Ziel zu erreichen wie Forderung(5).

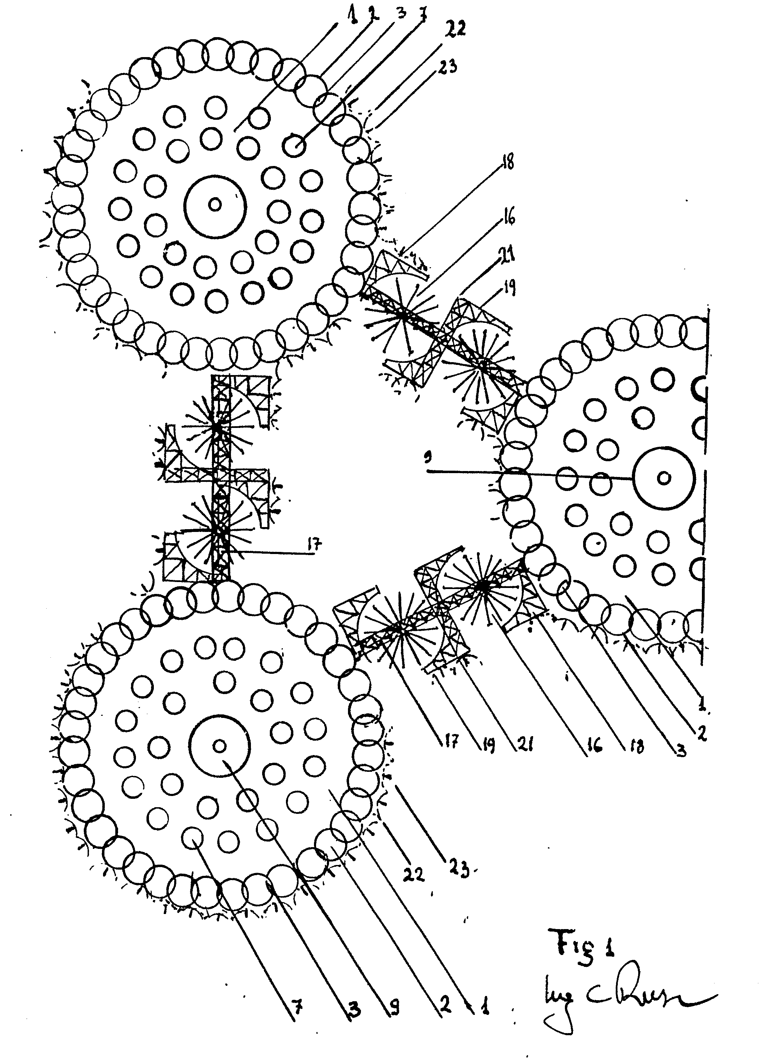

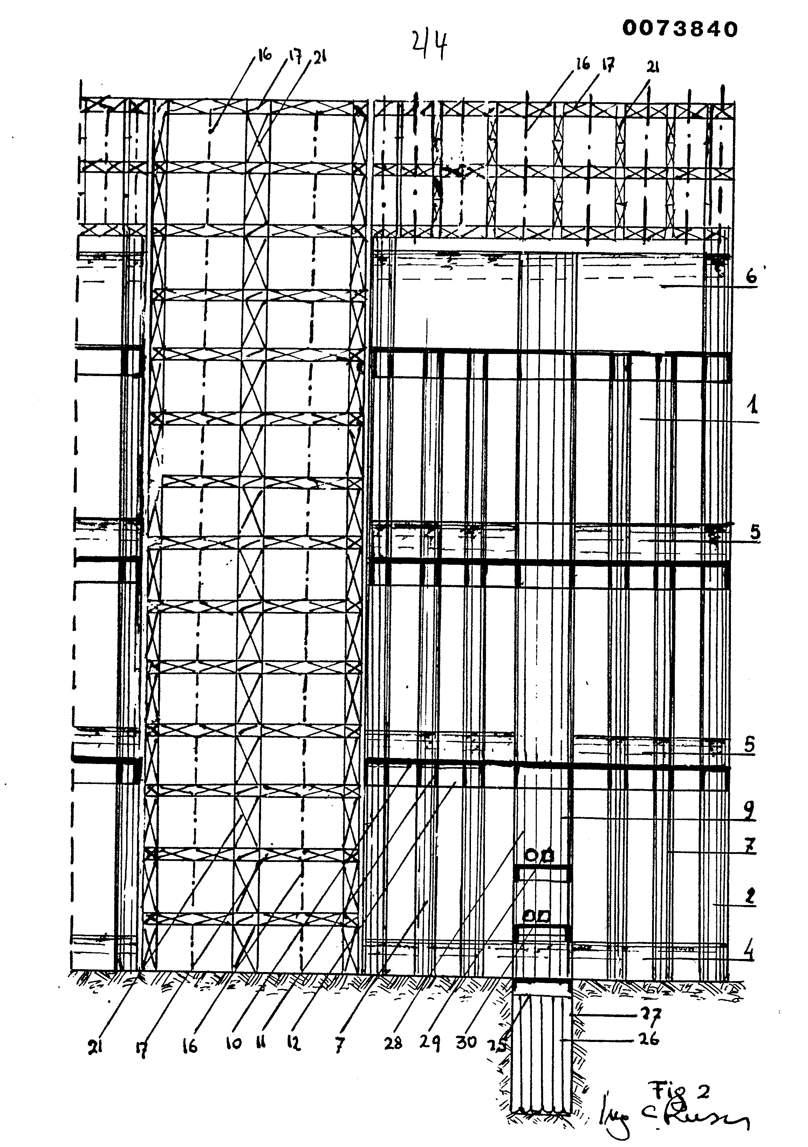

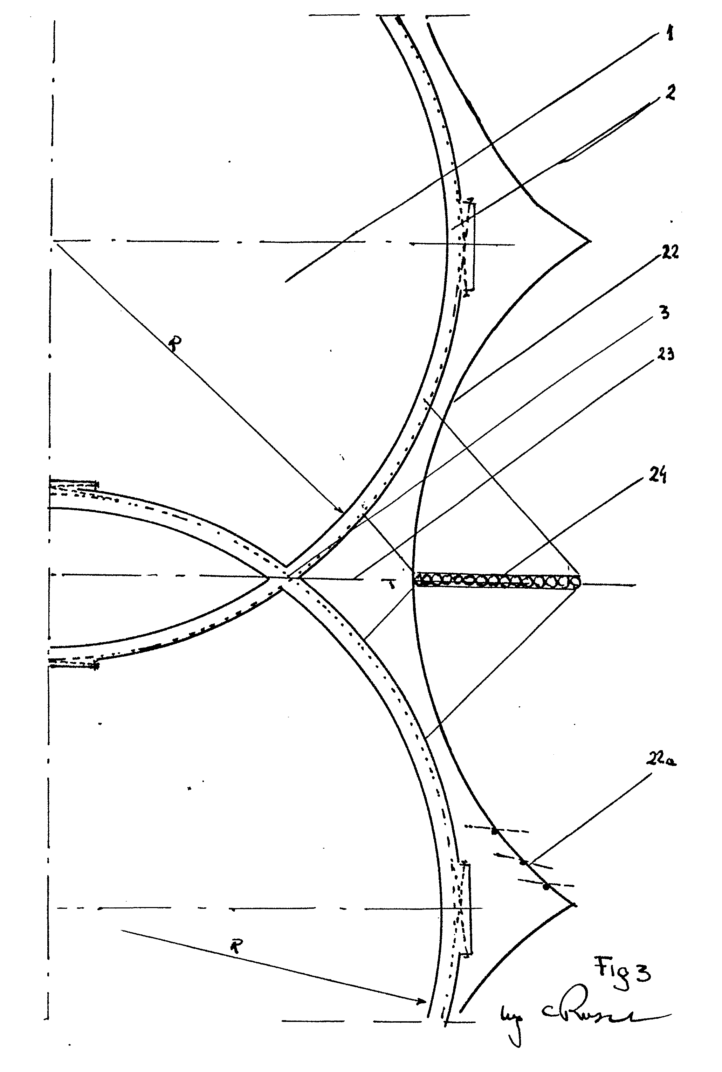

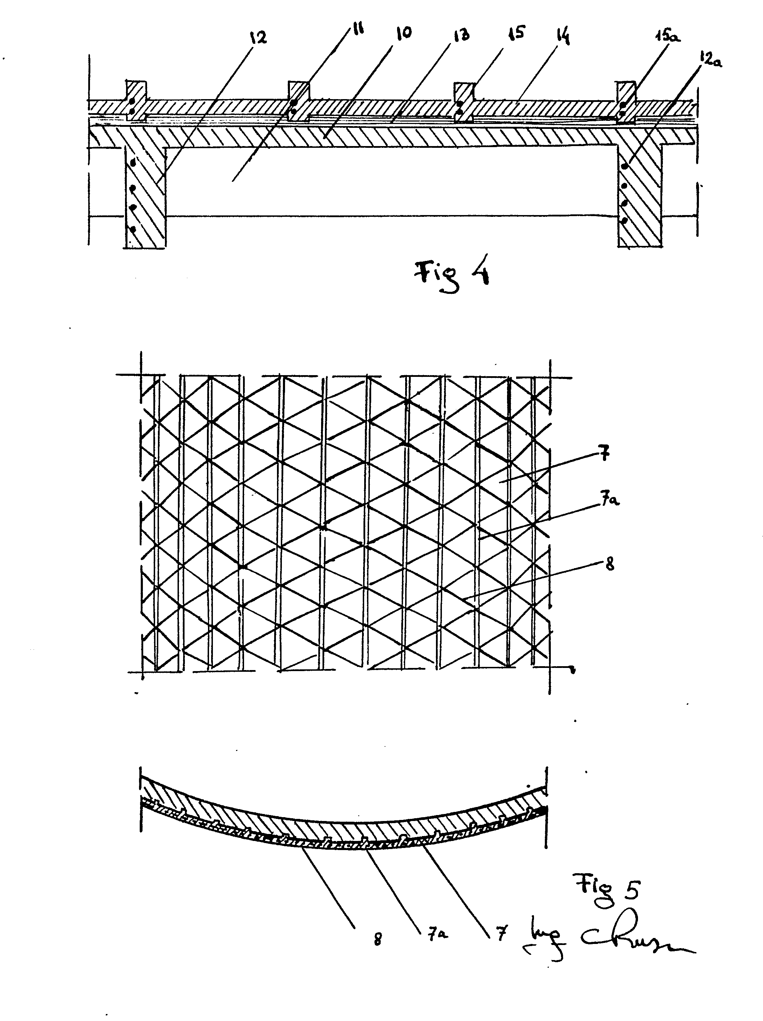

7) Die Anlage wie Forderungen 1 - 6 ist charakterisiert dadurch daß die Konstruktionen wie in Fig. 1-5 gebildet sind für Windturbinen ,Ergänzungsabschirmungen parabolische Spiegel mit ihren Wandröhren und Behälter des Wasserschloßes.

Dipl.Ing. Costica RUSU
bei Sapunaru Alexandru
Heerstr. 12
8ooo München 6o

Fig 1

Fig 2

0073840

1

2

22

3

23

24

22a

R

R

Fig 3

4/4

0073840

Fig 4

Fig 5

# EUROPÄISCHER RECHERCHENBERICHT

EP 81 10 0618

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 03 D 9/00<br>F 03 G 7/02 |
| | US - A - 4 004 427 (BUTLER) | 1,4,7 | |
| | * Spalte 4, Zeile 38 bis Spalte 9, Zeile 55 * | | |
| | --- | | |
| | DE - B - 1 200 611 (UNITED AIR-CRAFT CO.) | 1,5,6 | |
| | * Spalte 3, Zeile 26 bis Spalte 5, Zeile 24 * | | |
| | --- | | |
| | US - A - 3 979 597 (DRUCKER) | 1,4,5,7 | |
| | * Spalte 4, Zeile 11 bis Spalte 5, Zeile 45 * | | RECHERCHIERTE SACHGEBIETE (Int. Cl.³) |
| | --- | | F 03 D<br>F 03 G |
| | US - A - 4 010 614 (ARTHUR) | 1,5 | |
| | * Spalte 3, Zeile 23 bis Spalte 8, Zeile 8 * | | |
| | --- | | |
| | US - A - 4 230 531 (FERNANDO PULLE) | 1 | |
| | * Spalte 1, Zeile 61 bis Spalte 3, Zeile 38 * | | |
| | ------- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22.09.1981 | DE WINTER |

EPA form 1503.1  06.78